# EUROPÄISCHE PATENTSCHRIFT

(11) **EP 1 843 132 B1**
(45) Veröffentlichungstag und Bekanntmachung des Hinweises auf die Patenterteilung: **08.05.2013**
(21) Anmeldenummer: 07001821.3
(22) Anmeldetag: 27.01.2007
(51) Int. Cl.: G01D 5/244

(54) **Verfahren zum Initialisieren eines Positionsmesssystems**
Method for initialising a position measurement system
Procédé d'initialisation d'un système de mesure de position

(30) Priorität: 04.04.2006 DE 102006015725
(43) Veröffentlichungstag der Anmeldung: 10.10.2007
(73) Patentinhaber: Dr. Johannes Heidenhain GmbH, 83301 Traunreut (DE)
(72) Erfinder: Holzapfel, Wolfgang, 83119 Obing (DE); Rascher, Kai, 83278 Traunstein (DE)

(56) Entgegenhaltungen:
- EP-A2- 1 182 509
- DE-A1- 10 157 112
- DE-A1- 19 642 200
- US-A- 5 128 609

## Beschreibung

Die Erfindung betrifft ein Verfahren zum Initialisieren eines Positionsmesssystems. Es ermöglicht die Inbetriebnahme eines Positionsmesssystems für ein in mehreren Freiheitsgraden relativ zu einem Messrahmen bewegliches Objekt.

Für hochgenaue Positionsmessaufgaben im Nanometerbereich und darunter ist es nicht mehr möglich, die einzelnen Achsen einer Maschine sequentiell zu vermessen. Bei einer solchen sequentiellen Messanordnung werden die einzelnen Messgeräte für jede Achse aufeinander montiert, so dass z.B. der ruhende Teil des zweiten Messgeräts für die Y-Richtung mit dem beweglichen Teil des ersten Positionsmessgeräts für die auf die Y-Richtung senkrecht stehende X-Richtung verbunden ist. Mit dem beweglichen Teil des zweiten Messgeräts ist dann das zu überwachende Objekt, (z.B. ein Positioniertisch) verbunden. In der Führung für die X-Richtung treten immer auch kleine Führungsabweichungen in Y-Richtung auf. Solche Führungsabweichungen können aber in einer sequentiellen Messanordnung vom zweiten Positionsmessgerät nicht erfasst werden, da es als Ganzes mit diesen Führungsabweichungen mitbewegt wird. Auch bei sehr hochwertigen Führungen können Abweichungen von mehreren Nanometern quer zur Führungsrichtung auftreten. Eine hochgenaue Positionsmessung in mehreren Richtungen mit einem sequentiellen Messaufbau ist somit ausgeschlossen.

Es ist notwendig, die ruhenden Teile der Messgeräte für alle Messrichtungen fest mit einem Messrahmen und die beweglichen Teile mit dem zu überwachenden Objekt zu verbinden. Nur so ist sichergestellt, dass jedes Messgerät wirklich alle relevanten Bewegungen in der jeweiligen Messrichtung erfassen kann. Es können z.B. am beweglichen Objekt Maßstäbe mit optischen, magnetischen oder kapazitiven Teilungen angebracht werden, die durch am Messrahmen angebrachte korrespondierende Abtastköpfe berührungslos abgetastet bzw. abgelesen werden. Üblicherweise tragen solche Maßstäbe neben einer hochgenauen Inkrementalspur weitere Spuren, die eine absolute Positionsinformation enthalten. Im einfachsten Fall kann dies eine Referenzmarke sein, die beim Überfahren mit dem Abtastkopf einer Signalperiode der Inkrementalspur zuzuordnen ist und damit eine absolute Positionsinformation liefert, oder auch eine absolut kodierte Spur, die in jeder Stellung des Positionsmessgeräts das Auslesen einer absoluten Position ermöglicht. Solche Spuren seien im Folgenden als Absolutspuren bezeichnet. In jedem Fall ist die Zuordnung der Absolutspur zur Inkrementalspur wichtig, da nur so exakte Positionswerte gebildet werden können.

In der Regel können die Inkrementalsignale, die aus der Abtastung der Inkrementalspuren resultieren, und meist auch die Absolutsignale, die aus der Abtastung der Absolutspuren resultieren, über einen weiten Toleranzbereich bzgl. der Ausrichtung von Maßstab und zugehörigem Abtastkopf erfasst und ausgewertet werden. Dies gilt jedoch nicht für die Zuordnung der absoluten Positionsinformation aus der Absolutspur zu der relativen Positionsinformation aus der Inkrementalspur. Diese Zuordnung bezeichnet man auch als den Anschluss der Absolutspur an die Inkrementalspur. Damit jeder Absolutinformation eindeutig eine Signalperiode der zugehörigen Inkrementalspur zugeordnet werden kann, muss für die Ausrichtung zwischen Abtastkopf und zugeordnetem Maßstab eine recht geringe Toleranz eingehalten werden, die im Folgenden auch Anschlusstoleranz genannt wird.

Bei der Inbetriebnahme einer Maschine mit einem solchen Positionsmesssystem bestehend aus mehreren Positionsmessgeräten für mehrere Freiheitsgrade bzw. Messrichtungen stellt sich das Problem, dass das bewegliche Objekt zum Messrahmen zunächst nur sehr grob ausgerichtet ist, z.B. durch mechanische Anschläge. Somit ist bei der Inbetriebnahme nur eine recht große Toleranz bzgl. der Ausrichtung zwischen Objekt und Messrahmen sichergestellt, die im Folgenden auch als Initialtoleranz bezeichnet werden wird. Ein zu großer Abtastabstand oder eine zu große gegenseitige Verkippung zwischen den Abtastköpfen und den zugeordneten Maßstäben kann die Auswertung der Absolutinformation bzw. deren Zuordnung zur Inkrementalspur unmöglich machen. Dies gilt vor allem dann, wenn auch Winkelachsen beteiligt sind. Eine Initialisierung des Positionsmesssystems ist dann sehr schwierig.

Es ist daher Aufgabe der Erfindung, ein Verfahren anzugeben, mit dem ein Positionsmesssystem für mehrere Freiheitsgrade initialisiert werden kann, auch wenn die Lage der Abtastköpfe und Maßstäbe der beteiligten Positionsmessgeräte zunächst eine genaue Positionsmessung nicht erlaubt.

Diese Aufgabe wird gelöst durch ein Verfahren nach Anspruch 1. Vorteilhafte Details des Verfahrens ergeben sich aus den von Anspruch 1 abhängigen Ansprüchen.

Es wird ein Verfahren zum Initialisieren eines Positionsmesssystems an einem in wenigstens zwei Freiheitsgraden relativ zu einem Messrahmen beweglichen Objekt beschrieben. Das Positionsmesssystem weist pro Freiheitsgrad wenigstens ein Positionsmessgerät mit einem Maßstab mit einer Inkrementalspur zur Messung von Relativpositionen und einer Absolutspur zur Messung von Absolutpositionen, sowie den Maßstäben zugeordnete Abtastköpfe zum Ablesen der Inkrementalspuren und Absolutspuren auf.

In einem Initialisierungsschritt wird die Inkrementalspur oder die Absolutspur mit einem ersten Auswerteverfahren ausgewertet und dabei ein Auswertungsergebnis gebildet. In einem Ausrichtschritt wird das bewegliche Objekt anhand des Auswertungsergebnisses aus dem Initialisierungsschritt zum Messrahmen ausgerichtet. In einem Erfassungsschritt werden die Absolutspuren mit einem zweiten Auswerteverfahren mit geringer Toleranz bzgl. der Ausrichtung von Abtastkopf und zugehörigem Maßstab ausgewertet und genaue Absolutpositionen für jeden Freiheitsgrad bestimmt, indem die Signale der Absolutspuren den Signalperioden der Inkrementalspuren eindeutig zugeordnet werden.

Die Erfindung beruht also auf der Idee, die beteiligten Positionsmessgeräte in einem Initialisierungsschritt zunächst mit einem ersten Auswerteverfahren auszulesen, das sich vom zweiten Auswerteverfahren unterscheidet, und dabei ein Auswertungsergebnis zu bilden, welches in einem Ausrichtschritt ermöglicht, das bewegliche Objekt relativ zum Messrahmen in eine gut definierte Ausgangslage zu bringen, in der die Lage der Maßstäbe und Abtastköpfe zueinander der zur exakten Positionsmessung nötigen Anschlusstoleranz entspricht. Evtl. können auch mehrere iterative Initialisierungs- und Ausrichtschritte nötig sein, bis die geringen Toleranzen bzw. Anschlusstoleranzen eingehalten werden. Eine entsprechende Überprüfung kann z.B. nach jedem Ausrichtschritt erfolgen, wobei dann entweder zu einem weiteren Initialisierungsschritt oder zum Erfassungsschritt verzeigt wird.

Es sei noch erwähnt, dass nach einem erfolgreichen Erfassungsschritt, in dem einer Signalperiode der Inkrementalspur eine eindeutige absolute Positionsinformation zugeordnet wurde, auf das Auslesen der Absolutspuren ganz verzichtet werden kann, indem lediglich ein Zähler die Signalperioden der Inkrementalspur mitzählt. Da dann auch kein Anschluss der Absolutspur an die Inkrementalspur mehr notwendig ist, kann die Toleranz für die Ausrichtung zwischen den Abtastköpfen und zugeordneten Maßstäben, die im Folgenden auch Betriebstoleranz genannt wird, wieder deutlich größer sein als die Anschlusstoleranz. Sie kann sogar der Initialtoleranz entsprechen. Falls jedoch aus Gründen der Betriebssicherheit die ständige Zuordnung von Absolutinformation und Inkrementalinformation notwendig ist, muss die Betriebstoleranz so eng wie die Anschlusstoleranz gewählt werden. Die Anschlusstoleranz ist also deutlich kleiner als die Initialtoleranz, die Betriebstoleranz kann je nach Anwendungsfall zwischen der Anschlusstoleranz und der Initialtoleranz liegen.

Weitere Vorteile sowie Einzelheiten der vorliegenden Erfindung ergeben sich aus der nachfolgenden Beschreibung von Ausführungsbeispielen anhand der Figuren. Dabei zeigt
- Figur 1: ein bewegliches Objekt mit drei Positionsmessgeräten,
- Figur 2: Signale der Abtastköpfe vor und nach dem Ausrichtschritt,
- Figur 3: ein Ablaufdiagramm.

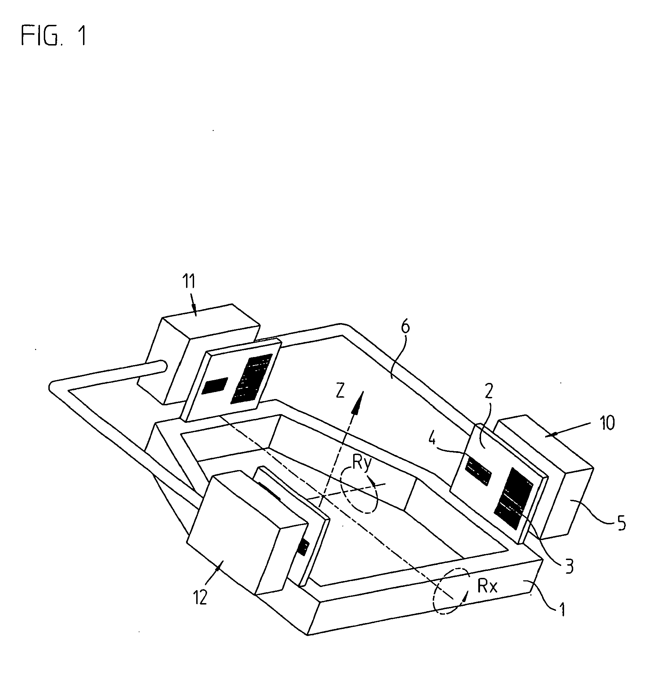

Figur 1 zeigt ein bewegliches Objekt 1. Das Objekt 1 ist in zwei rotatorischen Freiheitsgraden Rx und Ry sowie in einem translatorischen Freiheitsgrad Z beweglich, die entsprechenden Führungen sind nicht dargestellt. Die Kippachsen liegen in der Ebene des flächigen Objektes 1 und stehen aufeinander senkrecht. Die Z-Achse steht auf den beiden Kippachsen senkecht.

Am Objekt 1 sind drei Maßstäbe 2 befestigt, die jeweils eine Inkrementalspur 3 und eine Absolutspur 4 tragen. An einem Messrahmen 6 sind Abtastköpfe 5 befestigt, die den jeweiligen Maßstäben 2 zugeordnet sind und die sowohl die Inkrementalspuren 3 als auch die Absolutspuren 4 auslesen und in elektrische Signale umwandeln können.

Die Maßstäbe 2 und Abtastköpfe 5 bilden drei Positionsmessgeräte 10, 11, 12, die die Kippwinkel Rx, Ry und die Z-Position Z erfassen. Der Kippwinkel Rx lässt sich dabei aus der Differenz aus den Messungen der Positionsmessgeräte 10 und 12 (P12 - P10) ableiten. Der Kippwinkel Ry lässt sich aus der Differenz aus der Messung des Positionsmessgerätes 11 und der halben Summe aus den Messungen der Positionsmessgeräte 10 und 12 bestimmen (P11 - 0,5 * (P10 + P12)). Die Position in Z-Richtung lässt sich anhand der Summe aller drei Positionsmessgeräte 10, 11, 12 (P10 + P11 + P12) bestimmen. P10, P11, P12 steht dabei für den Positionswert, der vom jeweiligen Positionsmessgerät 10, 11, 12 ermittelt wird.

Die Absolutspuren 4 weisen Referenzmarken auf, die dazu dienen, jeweils eine Signalperiode der Inkrementalspuren 3 zu markieren. Durch Interpolation innerhalb der Perioden der Inkrementalspuren 3 und Zuordnung einer dieser Perioden zu den Referenzmarken der Absolutspuren 4 ist eine hochgenaue, absolute Positionsmessung für alle Freiheitsgrade Rx, Ry, Z möglich.

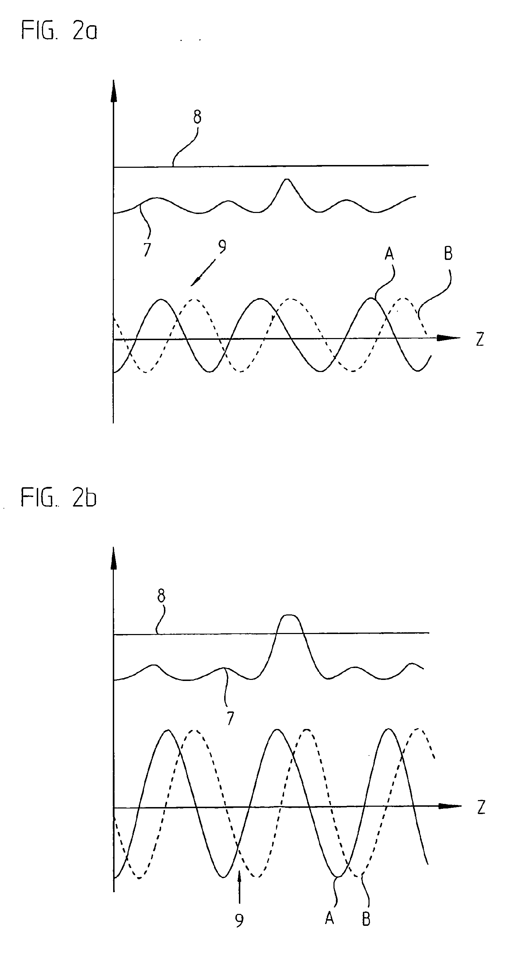

Figur 2a zeigt die Signale 7, 9 des Abtastkopfes 12 zur Erfassung der Lage des Objektes 1 in Abhängigkeit des Freiheitsgrades Z. Bei den Inkrementalsignalen 9 handelt es sich wie üblich um zwei um 90 Grad gegeneinander phasenverschobene periodische Signale A und B.

Zur Erkennung der Referenzmarke der Absolutspur 4 und deren Zuordnung zu einer Periode der Inkrementalsignale 9 wäre es nötig, dass das Referenzmarkensignal 7 eine Triggerschwelle 8 überschreitet. Wegen der Verkippung des Objekts im Freiheitsgrad Ry ist das Referenzmarkensignal 7 aber so weit degeneriert, dass diese Triggerschwelle 8 nicht mehr erreicht wird. Ziel ist es, die Signalspitze des Referenzmarkensignals 7 eindeutig einer Periode der Inkrementalsignale 9 zuzuordnen. Erst dann ist eine genaue Positionsbestimmung möglich.

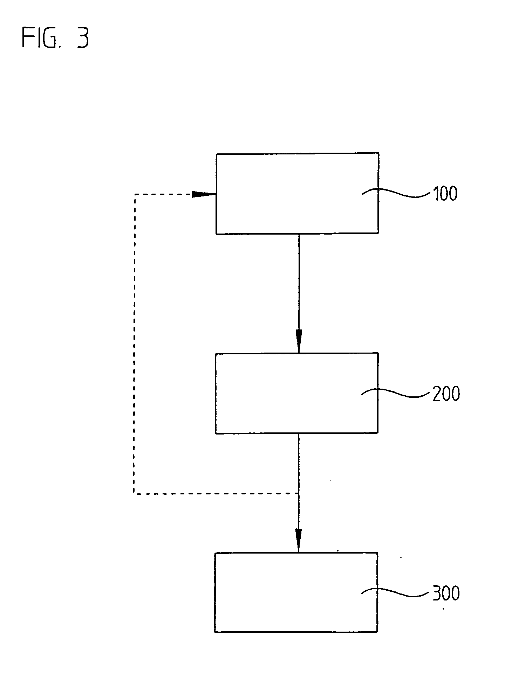

Gemäß einem ersten Ausführungsbeispiel wird daher in einem Initialisierungsschritt 100 (vgl. Figur 3) zunächst ein erstes Auswerteverfahren für die Absolutspur 4 bzw. deren Referenzmarke angewandt, das zwar nur eine ungefähre Positionsbestimmung erlaubt, dafür aber eine hohe Toleranz entsprechend der Initialtoleranz bezüglich der Ausrichtung zwischen Abtastkopf und zugehörigem Maßstab aufweist.

Eine ungefähre Positionsbestimmung bedeutet z.B., dass die Zuordnung der Referenzmarke zur Inkrementalspur 3 nur auf einige wenige Signalperioden genau ist. Es könnte aber auch z.B. nur eine Absolutspur 4 ausgelesen werden, mit der mehrere Absolutpositionen kodiert sind (z.B. mit einem PRC-Code), ohne diese Absolutspur 4 der Inkrementalspur 3 überhaupt zuzuordnen. Das Auslesen der Inkrementalspur 3 ist in diesem Fall nur dann notwendig, wenn mit den Inkrementalspurinformationen die Maschinenachsen während der Initialisierung geregelt werden müssen, z.B. im Ausrichtschritt.

So kann das Referenzmarkensignal 7 der Figur 2a beispielsweise mit einem Blockfilter ausgewertet werden, der das Referenzmarkensignal 7 über eine bestimmte Breite aufintegriert. Die Breite sollte in etwa der erwarteten Breite der Signalspitze im Referenzmarkensignal 7 entsprechen, um eine optimale Unterdrückung von Rauschen und sonstigen Störspitzen zu erreichen. Lässt man diese Breite über das Referenzmarkensignal 7 wandern, so wird das Integral in etwa im Bereich der tatsächlichen Lage der Referenzmarke am größten sein. Auch wenn die so bestimmte Lage der Referenzmarke nicht sicher einer bestimmten Signalperiode der Inkrementalspur 3 zugeordnet werden kann, so ist diese Zuordnung doch auf wenige Signalperioden genau. Ein ungefährer Positionswert kann so für alle Freiheitsgrade Rx, Ry, Z als Auswertungsergebnis bestimmt und im Ausrichtschritt 200 zum Ausrichten des Objektes 1 verwendet werden.

Ein Beispiel für ein weiteres Verfahren zum Auswerten des Referenzmarkensignals 7, das immer dann geeignet ist, wenn das Referenzmarkensignal irgend ein bestimmtes Muster aufweist (z.B. mehrere Spitzen mit bestimmten, evtl. variablen Abständen), ist eine Kreuzkorrelationsrechnung mit einem entsprechenden Muster und eine Bewertung des Ergebnisses der Kreuzkorrelationsrechnung: Der Ort der höchsten Korrelation wird ungefähr der Lage der Referenzmarke entsprechen.

Bei Referenzmarkensignalen 7, die eine lokale Signalmodulation mit definierter Frequenz aufweisen, ist es vorteilhaft, diese Frequenz in einem ersten Schritt zu filtern, um deren Amplitude zu bestimmen und schließlich deren Maximum zu suchen und damit die ungefähre Lage der Referenzmarke zu ermitteln. Die Signalmodulation kann dabei auch durch mehrere definierte Frequenzen erfolgen.

Ziel all dieser Verfahren im Initialisierungsschritt 100 ist es, das Nutzsignal im Referenzmarkensignal 7 von Rauschen und Störspitzen zu befreien und so eine Auswertung mit großer Toleranz entsprechend der Initialtoleranz bezüglich der Ausrichtung von Abtastkopf und Maßstab zu erreichen.

In einem Ausrichtschritt 200 wird das Objekt 1 anhand der im Initialisierungsschritt 100 bestimmten ungefähren Positionswerte so positioniert, dass die Abtastköpfe 5 nun besser zu den Maßstäben 2 ausgerichtet sind.

In einem Erfassungsschritt 300 kann nun die exakte Position des Objektes 1 relativ zum Messrahmen 6 erfasst werden. In der Figur 2b erkennt man, dass das Referenzmarkensignal 7 nun die Triggerschwelle 8 zur genauen Erfassung der Referenzmarkenlage überschreitet. Die Anschlusstoleranz bezüglich der Ausrichtung von Abtastkopf 12 zu dessen zugeordnetem Maßstab ist nun eingehalten. Somit ist auch eine eindeutige Zuordnung der Absolutspur 4 bzw. deren Referenzmarke zu einer Signalperiode des Inkrementalsignals 9 möglich. Durch Interpolation der Inkrementalspur 3 und zählen der Perioden ist nun über die ganze Messlänge eine sehr genaue Positionsbestimmung möglich.

Falls die Ausrichtung der Abtastköpfe 5 und Maßstäbe 2 nach dem Ausrichtschritt 200 noch nicht die Anschlusstoleranz des zweiten Auswerteverfahrens der Absolutspur 4 einhält, können weitere Initialisierungsschritte 100 und Ausrichtschritte 200 mit dann immer genauerer Ausrichtung erfolgen, bis eine Verzweigung zum Erfassungsschritt 300 möglich ist. Hierzu kann zwischen den Ausrichtschritt 200 und den Erfassungsschritt 300 eine bedingte Verzweigung eingefügt werden, die zum Initialisierungsschritt 100 verzweigt, wenn die Anschlusstoleranz für das zweite Auswerteverfahren noch nicht eingehalten ist, und andernfalls zum Erfassungsschritt verzweigt. Dies ist in Figur 3 durch einen Pfeil mit gestrichelter Linie angedeutet.

Gemäß einem zweiten Ausführungsbeispiel werden im Initialisierungsschritt 100 nicht wie im ersten Ausführungsbeispiel die Absolutspuren 4, sondern vielmehr die Inkrementalspuren 3 mit einem ersten Auswerteverfahren ausgewertet. Dabei werden nicht ungefähre Absolutpositionen ermittelt, sondern es wird eine Signaleigenschaft der Inkrementalsignale 9 ausgewertet und ein entsprechendes Auswertungsergebnis gebildet. So lässt sich beispielsweise aus der Signalstärke bzw. Amplitude der beiden um 90 Grad gegeneinander phasenverschobenen Signale A, B auf die Ausrichtung zwischen dem Abtastkopf 5 und dem Maßstab 2 schließen: Im ausgerichteten Zustand (vgl. Figur 2b), also bei Einhaltung der Ausrichttoleranz, ist diese Amplitude deutlich größer als im nicht ausgerichteten Zustand (vgl. Fig. 2a, Ausrichttoleranz nicht eingehalten). Ermittelt man also während des Initialisierungsschrittes 100, dass die fragliche Amplitude zu niedrig ist, so kann man z.B. die Verkippung des Objektes 1 bzgl. des Freiheitsgrades Ry im Ausrichtschritt 200 so lange verändern, bis die Amplitude einen Wert erreicht, der auf einen ausgerichteten Zustand schließen lässt, in dem die Anschlusstoleranz eingehalten ist. Der Initialisierungsschritt 100 (hier Bestimmung der Amplitude) und der Ausrichtschritt 200 (hier die Verkippung des Objektes 1 bzgl. Ry) werden dabei so oft durchlaufen, bis der Erfassungsschritt 300 möglich ist.

Andere mögliche Signaleigenschaften der periodischen Inkrementalsignale 9, die sich als Signaleigenschaft zum Auswerten im Initialisierungsschritt 100 eignen, sind die Phasenlage der beiden im Idealfall um 90 Grad phasenverschobenen Inkrementalsignale A und B, oder auch deren Nullpunktsverschiebung.

## Patentansprüche

1. Verfahren zum Initialisieren eines Positionsmesssystems an einem in wenigstens zwei Freiheitsgraden (Rx, Ry, Z) relativ zu einem Messrahmen (6) beweglichen Objekt (1), wobei das Positionsmesssystem pro Freiheitsgrad (Rx, Ry, Z) wenigstens ein Positionsmessgerät (10, 11, 12) mit je einem Maßstab (2) mit einer Inkrementalspur (3) zur Messung von Relativpositionen und einer Absolutspur (4) zur Messung von Absolutpositionen sowie den Maßstäben (1) zugeordnete Abtastköpfe (5) zum Ablesen der Inkrementalspuren (3) und Absolutspuren (4) aufweist, **dadurch gekennzeichnet, dass** in einem Initialisierungsschritt (100) von den Abtastköpfen (5) bei der Ablesung der Absolutspuren (4) gebildete Signale (7) mit einem ersten Auswerteverfahren ausgewertet werden, das eine große Toleranz bzgl. der Ausrichtung von Abtastkopf (5) und zugehörigem Maßstab (2) aufweist, und so für jeden Freiheitsgrad (Rx, Ry, Z) eine ungefähre Absolutposition bestimmt wird, in einem Ausrichtschritt (200) das bewegliche Objekt (1) anhand der ungefähren Absolutpositionen zum Messrahmen (6) ausgerichtet wird, und in einem Erfassungsschritt (300) die Signale (7) der Absolutspuren (4) mit einem zweiten Auswerteverfahren mit einer geringen Toleranz bzgl. der Ausrichtung von Abtastkopf (5) und zugehörigem Maßstab (2) ausgewertet und genaue Absolutpositionen für jeden Freiheitsgrad (Rx, Ry, Z) bestimmt werden, wobei im Ausrichtschritt (200) anhand der im Initialisierungsschritt (100) ermittelten ungefähren Absolutpositionen die Ausrichtung des Objektes (1) zum Messrahmen (6) und damit der Abtastköpfe (5) zu den Maßstäben (2) so vorgenommen wird, dass die geringe Toleranz im Erfassungsschritt (300) eingehalten wird.

2. Verfahren nach Anspruch 1, **dadurch gekennzeichnet, dass** die Absolutspur (4) eine Referenzmarke aufweist, die anhand des ersten und zweiten Auswerteverfahrens ausgewertet wird.

3. Verfahren nach Anspruch 2, **dadurch gekennzeichnet, dass** das erste Auswerteverfahren lediglich eine ungefähre Zuordnung der Referenzmarke zur Inkrementalspur (3) erlaubt und das zweite Auswerteverfahren eine genaue Zuordnung der Referenzmarke zur Inkrementalspur (3) garantiert.

4. Verfahren nach Anspruch 1, **dadurch gekennzeichnet, dass** die Absolutspur (4) einen Code trägt, in dem mehrere absolute Positionen codiert sind, und dass dieser Code anhand des ersten und zweiten Auswerteverfahrens ausgewertet wird.

5. Verfahren nach Anspruch 4, **dadurch gekennzeichnet, dass** die ungefähre Absolutposition nur anhand der Absolutspur (4) bestimmt wird.

## Claims

1. Method for initializing a position measurement system on an object (1) movable relative to a measurement frame (6) in at least two degrees of freedom (Rx, Ry, Z), the position measurement system having per degree of freedom (Rx, Ry, Z) at least one position measurement unit (10, 11, 12) with in each case a scale (2) having an incremental track (3) for measuring relative positions and an absolute track (4) for measuring absolute positions, as well as scanning heads (5), assigned to the scales (2), for reading off the incremental tracks (3) and absolute tracks (4), **characterized in that** in an initialization step (100) signals (7) formed by the scanning heads (5) when reading off the absolute tracks (4) are evaluated using a first evaluation method which has a large tolerance with reference to the alignment of scanning head (5) and associated scale (2), and so an approximate absolute position is determined for each degree of freedom (Rx, Ry, Z), in an alignment step (200) the movable object (1) is aligned with the measurement frame (6) with the aid of the approximate absolute positions, and in a detection step (300) the signals (7) of the absolute tracks (4) are evaluated using a second evaluation method having a low tolerance with reference to the alignment of scanning head (5) and associated scale (2), and exact absolute positions are determined for each degree of freedom (Rx, Ry, Z), the alignment of the object (1) with the measurement frame (6), and thus of the scanning heads (5) with the scales (2) being undertaken in the alignment step (200) with the aid of the approximate absolute positions determined in the initialization step (100) in such a way that the low tolerance is met in the detection step (300).

2. Method according to Claim 1, **characterized in that** the absolute track (4) has a reference mark which is evaluated with the aid of the first and second evaluation methods.

3. Method according to Claim 2, **characterized in that** the first evaluation method allows only an approximate assignment of the reference mark to the incremental track (3), and the second evaluation method ensures an accurate assignment of the reference mark to the incremental track (3).

4. Method according to Claim 1, **characterized in that** the absolute track (4) bears a code in which a plurality of absolute positions are coded, and **in that** said code is evaluated with the aid of the first and second evaluation methods.

5. Method according to Claim 4, **characterized in that** the approximate absolute position is determined only with the aid of the absolute track (4).

## Revendications

1. Procédé d'initialisation d'un système de positionnement sur un objet (1) mobile suivant au moins deux degrés de liberté (Rx, Ry, Z) par rapport à un référentiel de mesure (6), dans lequel le système de positionnement comprend au moins un appareil de mesure de position (10, 11, 12) par degré de liberté (Rx, Ry, Z) comportant chacun une échelle (2) comprenant une piste incrémentale (3) destinée à mesurer des positions relatives et une piste absolue (4) destinée à mesurer des position absolues, ainsi que des têtes de balayage (5) affectées aux échelles (2) pour lire les pistes incrémentales (3) et les pistes absolues (4), **caractérisé en ce que**, lors d'une étape d'initialisation (100) des têtes de balayage (5) lors de la lecture des pistes absolues (4), des signaux créés (7) sont évalués au moyen d'un premier procédé d'évaluation présentant une tolérance élevée vis-à-vis de l'alignement de la tête de balayage (5) et à l'échelle (2) correspondante, de telle sorte qu'une position approximativement absolue est déterminée pour chaque degré de liberté (Rx, Ry, Z), **en ce que**, lors d'une étape d'alignement (200), l'objet mobile (1) est aligné sur la base des positions approximativement absolues par rapport au référentiel de mesure (6), et **en ce que**, lors d'une étape de détection (300), les signaux (7) des pistes absolues (4) sont évalués au moyen d'un second procédé d'évaluation avec une plus faible tolérance vis-à-vis de l'alignement de la tête de balayage (5) et l'échelle de mesure correspondante (2) et des positions absolues sont déterminées pour chaque degré de liberté (Rx, Ry, Z), dans lequel, lors de l'étape d'alignement (200), l'alignement de l'objet (1) par rapport au référentiel de mesure (6) et par conséquent l'alignement des têtes de balayage (5) par rapport aux échelles (2) sont effectués sur la base des positions approximativement absolues obtenues lors de l'étape d'initialisation (100), de telle manière que la faible tolérance soit respectée lors de l'étape de détection (300).

2. Procédé selon la revendication 1, **caractérisé en ce que** la piste absolue (4) comprend une marque de référence qui est évaluée sur la base des premier et second procédés d'évaluation.

3. Procédé selon la revendication 2, **caractérisé en ce que** le premier procédé d'évaluation ne permet qu'une affectation approximative de la marque de référence à la piste incrémentale (3) et le second procédé d'évaluation garantit une affectation précise de la marque de référence à la piste incrémentale (3).

4. Procédé selon la revendication 1, **caractérisé en ce que** la piste absolue (4) porte un code dans lequel sont codées une pluralité de positions absolues et **en ce que** ce code est évalué sur la base des premier et second procédés d'évaluation.

5. Procédé selon la revendication 4, **caractérisé en ce que** la position approximativement absolue n'est déterminée que sur la base de la piste absolue (4).
